# EUROPÄISCHE PATENTSCHRIFT

(11) **EP 2 271 851 B1**
(45) Veröffentlichungstag und Bekanntmachung des Hinweises auf die Patenterteilung: **18.12.2013**
(21) Anmeldenummer: 09730080.0
(22) Anmeldetag: 04.04.2009
(51) Int. Cl.: F16C 27/06, F16C 13/00

(54) **LAGERANORDNUNG FÜR EINE TRAGROLLE UND VERFAHREN ZU IHRER HERSTELLUNG**
BEARING ARRANGEMENT FOR AN IDLE ROLLER AND METHOD FOR THE PRODUCTION THEREOF
ENSEMBLE DE ROULEMENT POUR ROULEAU PORTEUR ET SON PROCÉDÉ DE FABRICATION

(30) Priorität: 10.04.2008 DE 102008018197; 31.05.2008 DE 102008026350; 26.07.2008 DE 102008034939
(43) Veröffentlichungstag der Anmeldung: 12.01.2011
(73) Patentinhaber: AB SKF, 415 50 Göteborg (SE)
(72) Erfinder: KAMM, Sandra, 97469 Gochsheim (DE); HORLING, Peter, 97453 Schonungen (DE); PICKEL, Edgar, 97334 Sommerach (DE); OLSCHEWSKI, Armin, 97422 Schweinfurt (DE)
(74) Vertreter: Schonecke, Mitja
(86) Internationale Anmeldenummer: PCT/EP2009/002506
(87) Internationale Veröffentlichungsnummer: WO 2009/124701

(56) Entgegenhaltungen:
- EP-A- 1 674 746
- DE-A1- 1 482 737
- DE-A1- 4 203 449
- DE-U- 1 738 837
- US-A- 3 107 946

## Beschreibung

Die Erfindung betrifft eine Lageranordnung für eine zumindest abschnittsweise hohlzylindrisch ausgebildete Tragrolle, mit mindestens einem einen Tragrollenmantel lagernden Lager, wobei zwischen einem Ring des Lagers und dem Tragrollenmantel direkt oder indirekt eine Dämpfungsschicht angeordnet ist, wobei in mindestens einem axialen Abschnittsbereich des Tragrollenmantels zwischen der inneren zylindrischen Oberfläche des Tragrollenmantels und der Dämpfungsschicht ein hülsenförmiger Körper angeordnet ist und wobei der hülsenförmige Körper an mindestens einer Umfangsstelle eine Unterbrechung aufweist. Des weiteren betrifft die Erfindung ein Verfahren zum Herstellen einer solchen Lageranordnung.

Für die Lagerung von Tragrollen sind im Stand der Technik diverse Möglichkeiten bekannt, die die spezielle Ausgestaltung mit einschließen, zwecks verbesserter Dämpfung eine Schicht Dämpfungsmaterial zwischen dem Tragrollenmantel und dem zumeist als Wälzlager ausgeführten Lager anzuordnen.

Die US 3 107 946 A offenbart eine gattungsgemäße Lageranordnung. Eine ähnliche Lösung zeigt die DE 1 738 837 U. Hier kommt eine elastomere Dämpfungsschicht zum Einsatz, die im Radialschnitt blockförmig ausgebildet ist und in ihren beiden axialen Endbereichen Einschnürungen aufweist. Mit dieser Dämpfungsschicht kann ein hohes Dämpfungsvermögen der Lageranordnung erzielt werden. Eine ähnliche Lösung ist aus der GB 592 043 A bekannt.

Die DE 28 01 879 A1 zeigt eine weitere ähnliche Lageranordnung, wobei das Lager über eine elastomere Zwischenschicht eine Hülse trägt. Die Hülse verbreitert sich in einem axialen Endbereich radial und ist mit ihrem radial äußeren Bereich an der zylindrischen Innenfläche des Tragrollenmantels angeschweißt.

Ähnliche Lageranordnungen zur gedämpften Lagerung einer Tragrolle sind aus der AT 215 887, aus der DE 24 00 701 A1 und aus der US 3 362 760 bekannt.

Das Einschnüren der Dämpfungsschicht insbesondere im stirnseitigen Bereich ist zumeist dadurch bedingt, dass das Material der Dämpfungsschicht nach seinem Anspritzen oder Anvulkanisieren an den Umgebungsbauteilen eine relativ hohe Volumenschwindung aufweist. Nach dem Spritzgießen von Elastomermaterial kann dessen Volumen um einige wenige Prozentpunkte, beispielsweise bis zu 4,5 %, schwinden, so dass entsprechende Kontraktionen hervorgerufen werden.

Dies hat in nachteiliger Weise zur Folge, dass im Elastomermaterial Zugspannungen auftreten, infolge deren es an den angrenzenden Kontaktflächen zu einem Umgebungsbauteil zu Ablösungen des Elastomermaterials von diesem Bauteil kommen kann. Dadurch wird der mechanische Verbund geschwächt und im übrigen auch die Fähigkeit zur Dämpfung von Schwingungen reduziert. Bei einer gattungsgemäßen Lageranordnung kann dies zur Folge haben, dass sich zumindest in Teilbereichen das Elastomermaterial von einer angrenzenden Hülse oder vom Lagerring oder von einem Lagerträger ablöst und so die Haftung zu den genannten Teilen verloren geht.

Der Erfindung liegt die Aufgabe e zu Grunde, eine Lageranordnung der eingangs genannten Art so fortzubilden, dass sichergestellt wird, dass auch bei der Volumenschwindung des Materials der Dämpfungsschicht keine Materialablösung von Umgebungsbauteilen der Dämpfungsschicht stattfindet, so dass die Funktion der Dämpfungsschicht vollumfänglich erhalten bleibt. Ferner wird angestrebt, dass gegebenenfalls vorhandene Ovalitäten und Unrundheiten der Anordnung in einfacher Weise ausgeglichen werden können, insbesondere hervorgerufen durch eine ungleichmäßige Aufbringung der Kräfte, die von der Lageranordnung aufgenommen werden sollen.

Die **Lösung** dieser Aufgabe durch die Erfindung ist dadurch gekennzeichnet, dass der hülsenförmige Körper an einem axialen Ende einen sich radial nach außen erstreckenden Ringabschnitt oder eine Anzahl sich jeweils über einen definierten Umfangsabschnitt und sich radial nach außen erstreckender Abschnitte aufweist, der bzw. die den Tragrollenmantel (2) axial umgreifen kann bzw. können, wobei der hülsenförmige Körper aus mindestens zwei Segmenten besteht, die sich jeweils über einen definierten Umfangsabschnitt erstrecken, wobei die Segmente des hülsenförmigen Körpers voneinander getrennt, aber über das Material der Dämpfungsschicht miteinander verbunden sind, wobei der hülsenförmige Körper an seinem anderen axialen Ende einen sich radial nach innen erstreckenden Ringabschnitt oder eine Anzahl sich jeweils über einen definierten Umfangsabschnitt und sich radial nach innen erstreckender Abschnitte aufweist.

Die Unterbrechung ist dabei vorzugsweise als sich in axiale Richtung des hülsenförmigen Körpers erstreckender Schlitz ausgebildet.

Der hülsenförmige Körper hat bevorzugt eine im wesentlichen hohlzylindrische Form. Er hat an einem axialen Ende einen sich radial nach außen erstreckenden Ringabschnitt, der den Tragrollenmantel axial umgreifen kann. Damit wird für den Tragrollenmantel ein definierter axialer Anschlag definiert. Hiernach überragt also der hülsenförmige Körper den Tragrollenmantel einseitig axial und weist im axialen Endbereich des Tragrollenmantels einen sich radial nach außen erstreckenden Bund auf.

Der sich radial nach außen und der sich gegebenenfalls radial nach innen erstreckende Ringabschnitt können dabei durch Umformen (insbesondere durch Umbördeln) eines axialen Endbereichs zumindest eines Teil des hülsenförmigen Körpers hergestellt sein.

Die sich radial nach außen und die sich radial nach innen erstreckenden Abschnitte können dabei durch Umformen eines axialen Endbereichs zumindest eines Teil des hülsenförmigen Körpers hergestellt sein. Die Abschnitte sind dabei mit Vorteil vor dem Umformen durch einen Stanzvorgang ausgeformt.

Die Abschnitte weisen bevorzugt eine im Wesentlichen rechteckige Form auf und bilden hierdurch hakenartige Gebilde, die den Tragrollenmantel axial umgreifen. Eine bevorzugte Ausführungsform sieht vor, dass zwischen 8 und 48 Abschnitte, vorzugsweise zwischen 12 und 30 Abschnitte, über den Umfang des hülsenförmigen Körpers angeordnet sind. Zwischen den Abschnitten können sich Ausnehmungen befinden, die sich über 50 % und 150 % des Bogens der Abschnitte entlang des Umfangs erstrecken.

Zwischen dem Ring des Lagers und der Dämpfungsschicht ist vorzugsweise ein Trägerkörper angeordnet.

Die Dämpfungsschicht kann aus Elastomermaterial bestehen, insbesondere aus Polyurethan. Sie kann auch aus Gummimaterial bestehen, insbesondere aus Nitrilkautschuk (NBR). Dieses hat bevorzugt eine Shore-Härte von mindestens 40.

Zwischen der Dämpfungsschicht und mindestens einem radial angrenzenden Bauteil ist bevorzugt ein Haftvermittler angeordnet, bevor die Dämpfungsschicht erzeugt wird.

Der hülsenförmige Körper und/oder der Trägerkörper können aus Metall bestehen. Der hülsenförmige Körper kann aus Eisen- oder Stahlblech bestehen.

Die Dämpfungsschicht ist vorzugsweise zwischen den einen Ring des Lagers oder den Trägerkörper und den hülsenförmiger Körper durch einen Spritzgießvorgang eingebracht.

Der hülsenförmige Körper sitzt bevorzugt mit Presspassung in dem hohlzylindrischen Abschnitt des Tragrollenmantels.

Das mindestens eine Lager ist mit Vorteil ein Wälzlager. Der Tragrollenmantel kann als Rohr konstanter Wanddicke ausgebildet sein, das in beiden axialen Endbereichen mit je einem Lager gelagert ist.

Die Dämpfungsschicht ist bevorzugt als dünnwandiges, hohlzylindrisches Element ausgebildet. Vorzugsweise beträgt dabei die radiale Dicke der Dämpfungsschicht maximal 10 % des Außendurchmessers des Tragrollenmantels. Andererseits sollte die radiale Dicke der Dämpfungsschicht mindestens 1 % des Außendurchmessers des Tragrollenmantels betragen.

Das vorgeschlagene Verfahren zum Herstellen einer solchen Lageranordnung sieht folgende Schritte vor:
a) Spritzen eines schmelzflüssigen Materials der Dämpfungsschicht zwischen die radial äußere Fläche des Rings des Lagers oder des Trägerkörpers und die radial innere Fläche des hülsenförmigen Körpers, wobei der hülsenförmige Körper an der mindestens einen Umfangsstelle in Umfangsrichtung eine Unterbrechung mit einer Spaltbreite bildet;
b) Verfestigenlassen des schmelzflüssigen Materials der Dämpfungsschicht, wobei während des Verfestigens des Materials der Dämpfungsschicht eine Kontraktion desselben zugelassen wird, wodurch sich die Spaltbreite der Unterbrechung des hülsenförmigen Körpers vermindert;
c) Verbauen der Einheit bestehend aus Ring des Lagers, gegebenenfalls Trägerkörper, Dämpfungsschicht und hülsenförmigem Körper in den Tragrollenmantel.

Dabei ist vorzugsweise vorgesehen, dass nach der Verfestigung des Materials der Dämpfungsschicht die Spaltbreite Null oder nahe Null ist.

Unter Verfestigen ist hier zu verstehen, dass das zunächst als pastöse bzw. schmelzflüssige Masse eingebrachte Material der Dämpfungsschicht aushärtet bzw. sich verfestigt, was im Falle eines Thermoplasts durch Abkühlen, im Falle einer Gummimasse indes durch einen Vulkanisationsvorgang erfolgt.

Der erfindungsgemäße Vorschlag stellt zur Verhinderung eines Haftverlusts zwischen der Dämpfungsschicht und einem angrenzenden Bauteil sicher, dass Volumenschwindungen beim Abkühlen bzw. beim Verfestigen des Materials der Dämpfungsschicht nicht auftreten können, so dass Spannungen im Material der Dämpfungsschicht verhindert werden.

Durch den vorgesehenen Schlitz im hülsenförmigen Körper kann sich nämlich der hülsenförmige Körper bei der Volumenkontraktion des Materials der Dämpfungsschicht ohne Entstehung großer Kräfte radial zusammenziehen und so die Schwindung ausgleichen. Die Schwindung des Material kann im Vorfeld bestimmt und der Schlitz in dem hülsenförmigen Körper so ausgelegt werden, dass nach der zu erwartenden Schwindung die Schlitzbreite Null ist - bei dann im wesentlichen spannungsfreiem Material der Dämpfungsschicht. In der Praxis wird jedoch zumeist ein Endwert der Schlitzbreite von etwas über Null vorgesehen, um auch bei Toleranzen sicherzustellen, dass sich der hülsenförmige Körper um das solidifizierte Dämpfungsmaterial herum schließt; dadurch werden Spannungen im Material der Dämpfungsschicht vermieden, die sich ergeben könnten, wenn die Stoßstellen des hülsenförmigen Körpers im Bereich des Schlitzes aneinanderstoßen und eine weitere Schrumpfung des Materials auftritt.

Wird der hülsenförmige Körper durch mehrere separate Segmente gebildet, die nur über das Material der Dämpfungsschicht miteinander verbunden sind, wird es in besonders einfacher Weise möglich, Ovalitäten und Unrundheiten auszugleichen, die entstehen, wenn die Kraftaufbringung auf die Lageranordnung in nicht gleichmäßiger Weise erfolgt.

Die vorgesehene Dämpfungsschicht, die zumeist durch einen Spritzgießvorgang erzeugt ist, sorgt für einen hohen Grad an Koaxialität der Bauteile und für eine Schwingungsentkopplung. Ferner werden hierdurch stoßartige Lasten besser abgefangen. Es kommt dadurch also zu einem Selbstzentrierungseffekt.

Der hülsenförmige Körper samt Dämpfungsschicht, gegebenenfalls Trägerkörper und Lager können als Einheit ausgeführt sein, die als solche an der Förderanlage eingebaut wird, zu der die Tragrolle gehört. Dies hat logistische Vorteile zur Folge. Die Montage kann durch einfaches Einpressen des hülsenförmigen Körpers in den Tragrollenmantel erfolgen.

Die vorgeschlagene Lageranordnung wird bevorzugt im Tagebau eingesetzt und ist hier ein wesentlicher Bestandteil einer Tragrollenvorrichtung. Hier besteht ein hoher Bedarf an qualitativ hochwertigen und leichten Lageranordnungen, die sich durch eine hohe Lebensdauer und einen komfortablen Betrieb auszeichnen.

In der Zeichnung sind Ausführungsbeispiele der Erfindung dargestellt. Es zeigen:
- Fig. 1: den Radialschnitt durch eine Lageranordnung mit einer Tragrolle, die von einem Lager gelagert wird,
- Fig. 2: den Schnitt A-B gemäß Fig. 1, wobei allerdings nur ein Teil des Schnitts und dieser auch nur über einen Teil des Umfangs und ohne Tragrollenmantel dargestellt ist,
- Fig. 3: den Schnitt A-B analog zu Fig. 2 gemäß einer alternativ ausgebildeten Ausführungsform der Erfindung, wobei allerdings nur der hülsenförmige Körper samt Dämpfungsschicht dargestellt sind, und
- Fig. 4: eine zu Fig. 1 alternative Ausführungsform der Erfindung mit nur teilweiser Darstellung der Komponenten,
- Fig. 5: in perspektivischer Darstellung den hülsenförmigen Körper der Lageranordnung in einer alternativen Ausführungsform und
- Fig. 6: einen vergrößerten Ausschnitt des hülsenförmigen Körpers gemäß Fig. 5.

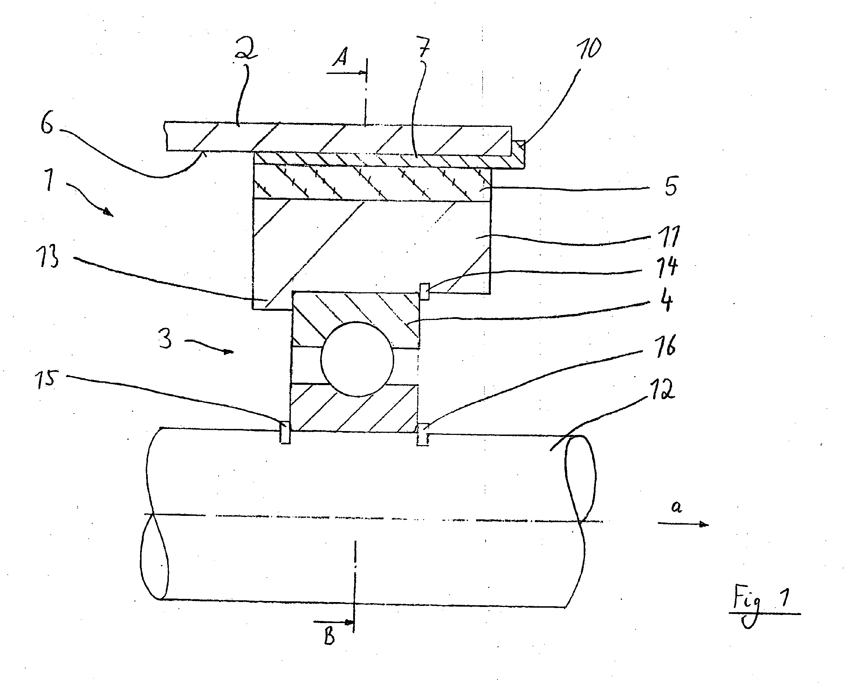

In Fig. 1 ist eine Lageranordnung 1 zu sehen, die dazu dient, einen Tragrollenmantel 2 einer Fördereinrichtung zu lagern. Die gesamte Anordnung, die in Fig. 1 dargestellt ist, kann als Tragrolle angesprochen werden. Dargestellt ist eine Welle 12, auf der ein Rillenkugellager 3 festgelegt ist. Der Außenring 4 des Rillenkugellagers 3 trägt einen Trägerkörper-11, der einen einseitigen Bord 13 aufweist, der den Außenring 4 axial umgreift und für ihn eine axiale Anlage bildet. Ansonsten sind in Nuten angeordnete Sprengringe 14, 15 und 16 vorgesehen, mit denen das Lager 3 relativ zur Welle 12 und das Lager 3 relativ zum Trägerkörper 11 axial festgelegt werden kann.

Der Tragrollenmantel 2 ist als hohlzylindrisches Bauteil, also als Rohr, ausgebildet, wobei in beiden axialen Endbereichen eine Lageranordnung 1 angeordnet ist, wie sie in Fig. 1 zu sehen ist. In die nach innen gerichtete Oberfläche 6 des Tragrollenmantels 2 ist ein hülsenförmiger Körper 7 eingepresst, der mit Presspassung in dem Tragrollenmantel 2 sitzt. Zwischen dem hülsenförmigen Körper 7 und dem Trägerkörper 11 ist eine Dämpfungsschicht 5 aus Elastomer- oder Gummimaterial angeordnet, die vorliegend als hohlzylindrische Schicht ausgeführt ist. Das Elastomer- bzw. Gummimaterial kann mit dem hülsenförmigen Körper 7 und/oder mit dem Trägerkörper 11 durch einen Spritzgießprozess oder durch einen Vulkanisationsprozess direkt verbunden sein.

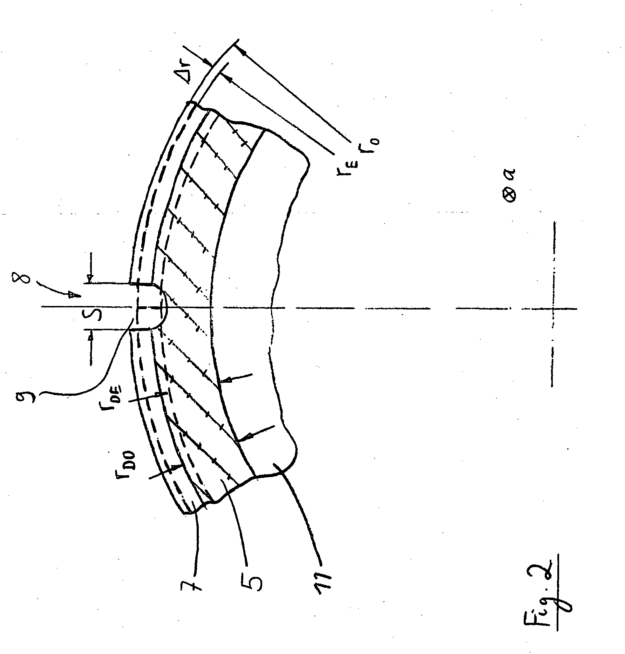

Wesentlich ist dabei, dass - wie es aus Fig. 2 hervorgeht - der hülsenförmige Körper 7 an mindestens einer Umfangsstelle 8 eine Unterbrechung 9 aufweist. Die Unterbrechung 9 ist dabei als sich in axiale Richtung a des hülsenförmigen Körpers 7 erstreckender Schlitz ausgebildet.

Damit wird folgender Effekt erzielt:

In Fig. 2 sind die Begrenzungsflächen des hülsenförmigen Körpers 7 zwei Mal dargestellt, nämlich einmal mit ausgezogenen Linien und einmal mit gestrichelten Linien.

Die ausgezogenen Linien entsprechen der Ausgangsformation, in der zwischen der radial inneren Oberfläche des hülsenförmigen Körpers 7 und der radial äußeren Oberfläche des Trägerkörpers 11 pastöses bzw. schmelzflüssiges Material der Dämpfungsschicht 5 eingespritzt wird. In dieser Stellung weist der hülsenförmige Körper an der Umfangsstelle 8 den Schlitz 9 mit einer Spaltbreite s auf. Der Außenradius des hülsenförmigen Körpers 7 beträgt hier r₀. Mit r_{D0} ist die radiale Erstreckung der Dämpfungsschicht 5 bezeichnet, wie sie sich nach dem Einspritzen des Materials aber vor dessen Verfestigung ergibt.

Härtet das Material der Dämpfungsschicht 5 aus, d. h. verfestigt es sich, tritt eine Schwindung im Volumen der Dämpfungsschicht 5 ein, die typischer Weise 4,5 % betragen kann. Beträgt die radiale Erstreckung r_{D0} vor der Verfestigung beispielsweise 5 mm, reduziert sich die radiale Erstreckung r_{DE} dann nach der Verfestigung um 0,225 mm (= 5 mm x 4,5 %) auf 4,775 mm. Entsprechend nimmt der Anfangswert des Außenradius des hülsenförmigen Körpers r₀ dann auf den geringeren Endwert r_{E} ab. Die sich ergebende Veränderung des Radius Δr ist eingetragen.

Da ein Spalt 9 mit einer entsprechend gewählten Spaltbreite s im hülsenförmigen Körper 7 vorgesehen ist, kann die Reduzierung des Außen- bzw. Innendurchmessers des hülsenförmigen Körpers 7 ohne nennenswerte Spannungserzeugung im Material der Dämpfungsschicht 5 erfolgen. In Fig. 2 ist mit gestrichelten Linien angedeutet, dass sich infolge der Volumenkontraktion des Materials der Dämpfungsschicht 5 nicht nur der Außendurchmesser des hülsenförmigen Körpers reduziert, sondern sich auch der Spaltabstand vermindert; er ist in Fig. 2 im Endzustand etwa Null geworden, d. h. der Spalt 9 hat sich nach der Volumenschwindung des Materials der Dämpfungsschicht 5 geschlossen bzw. reduziert. In der Regel wird hier - wie bereits oben erwähnt - vorgesehen, dass der Endspalt etwas größer als Null ist, um zuverlässig auch bei Toleranzen den Volumenschwindungsausgleich zuzulassen.

Gemäß einem möglichen Ausführungsbeispiel kann vorgesehen werden, dass der Spalt 9 nach Ausgleich der Volumenschwindung noch bis zu 10 mm - gemessen in Umfangsrichtung - beträgt. Wird dann der hülsenförmige Körper 7 samt Dämpfungsschicht 5 in den Tragrollenmantel montiert, kann sich im fertig montierten Zustand noch ein Restspalt von 5 mm - gemessen in Umfangsrichtung - ergeben. Es kann jedoch auch sinnvoll sein, den Spalt so zu bemessen, dass nach der Montage der Wert Null vorliegt, um eine Presspassung zwischen dem hülsenförmigen Körper 7 und dem Tragrollenmantel 2 zu erreichen.

Vorteilhaft ist, dass - wie es in Fig. 1 gesehen werden kann - in mindestens einem axialen Abschnittsbereich des Tragrollenmantels 2 zwischen der inneren zylindrischen Oberfläche 6 des Tragrollenmantels 2 und der Dämpfungsschicht 5 der hülsenförmige Körper 7 angeordnet ist, der den Tragrollenmantel 2 einseitig axial überragt und im axialen Endbereich des Tragrollenmantels 2 einen sich radial nach außen erstreckenden Ringabschnitt (Bund) 10 aufweist. Dieser Bund 10 kann auch als Auskragung angesprochen werden und bildet einen definierten axialen Anschlag für den Tragrollenmantel 2. Eine axiale Fixierung des Tragrollenmantels 2 relativ zum hülsenförmigen Körper 7 ist damit in vereinfachter Weise möglich.

Infolge des Anspritzens bzw. des Vulkanisierens der Dämpfungsschicht 5 können neben radialen Kräften auch axiale Kräfte über die Dämpfungsschicht 5 und damit zwischen Lager 3 und Tragrollenmantel 2 übertragen werden.

Als Material für die Dämpfungsschicht kommen elastomere Materialien sowie GummiMaterialien in Frage. Bevorzugt ist Nitrilkautschuk vorgesehen, d. h. ein Synthesekautschuk. Dessen Kurzbezeichnung NBR ist von der Bezeichnung Nitrile Butadiene Rubber abgeleitet. Er wird durch Copolymerisation von Acrylnitril und Butadien gewonnen.

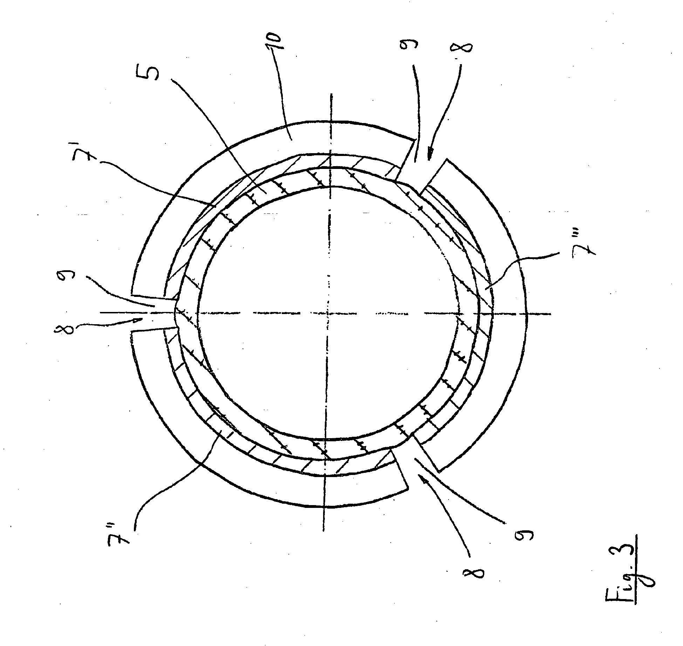

Die Ausführungsform der Erfindung gemäß Fig. 3 zeichnet sich dadurch aus, dass hier der hülsenförmige Körper 7 aus mehreren, nämlich drei, Segmenten 7', 7" und 7'" besteht, die sich in Umfangsrichtung jeweils über etwa ein Drittes des gesamten Umfangs erstrecken. Die drei Segmente 7', 7", 7'" sind dabei als separate Teile gefertigt und lediglich über das Material der Dämpfungsschicht 5 miteinander verbunden.

Dabei kann das Bauteil bestehend aus den drei Segmenten 7', 7", 7'" samt Dämpfungsschicht 5 durch Anspritzen des Materials der Dämpfungsschicht 5 als verliersicheres Teil hergestellt werden, das dann als ganzes verbaut wird.

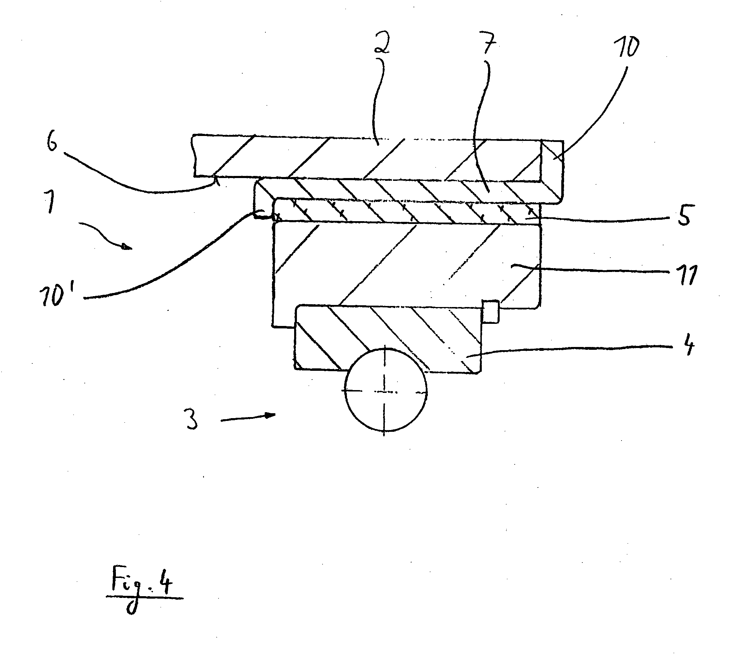

In Fig. 4 ist zu sehen, dass der hülsenförmige Körper 7 in beiden axialen Endbereichen je einen Ringabschnitt 10, 10' haben kann, wobei sich der Ringabschnitt 10 radial nach außen und der Ringabschnitt 10' radial nach innen erstreckt. Hierdurch wird für angrenzende Bauteile (Tragrollenmantel 2, Dämpfungsschicht 5) ein axialer Anschlag gebildet.

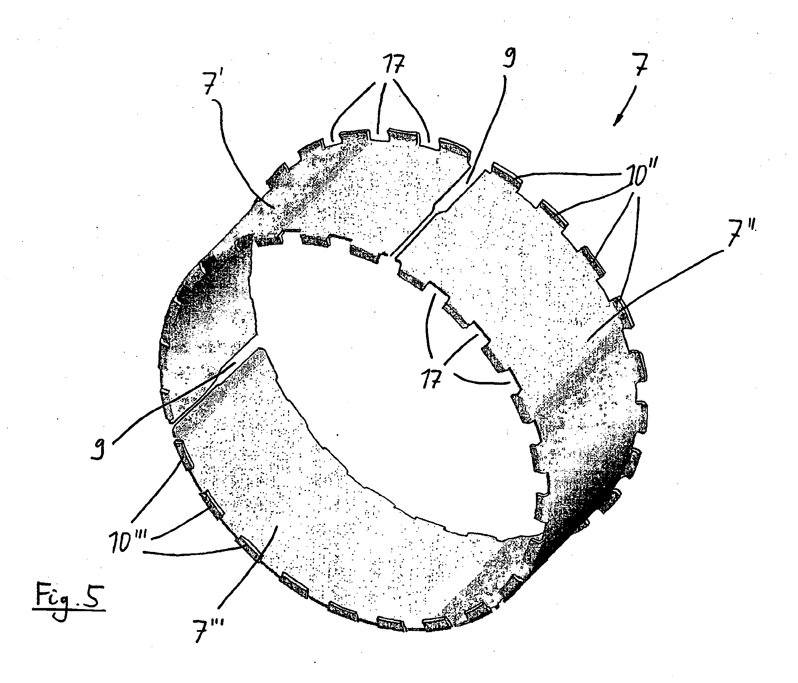

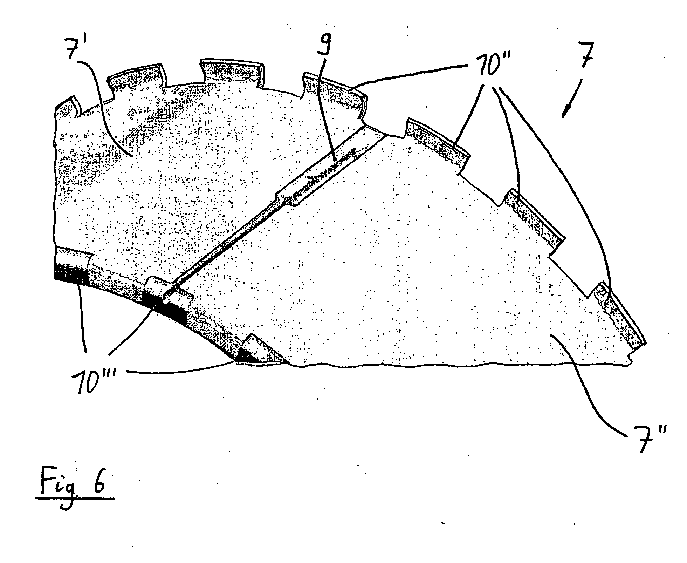

Eine alternative Ausführungsform des hülsenförmigen Körpers 7 ist in den Figuren 5 und 6 illustriert.

Der hier wieder aus drei Segmenten 7', 7" und 7'" bestehende hülsenförmige Körper 7 weist an einem axialen Ende Abschnitte 10" auf, die sich jeweils über einen Umfangsabschnitt von ca. 5° bis 10° erstrecken und so aus dem Grundkörper des hülsenförmigen Körpers 7 heraus gebogen sind, dass sie sich radial nach außen erstrecken. Am anderen axialen Ende sind gleichermaßen Abschnitte 10'" vorgesehen, die sich jeweils über den selben Umfangsbereich erstrecken und so umgebogen sind, dass sie radial nach innen weisen. Wie es in Fig. 4 zu sehen ist, umgreifen damit die hakenartigen Abschnitte 10" bzw. 10" den Tragrollenmantel 2 bzw. die Dämpfungsschicht 5. Die einzelnen Abschnitte 10" bzw. 10'" sind dabei von Ausnehmungen 17 unterbrochen, die sich etwa über den selben Umfangsbogen erstrecken wie die Abschnitte 10" und 10"'.

Das Herstellen des hülsenförmigen Körpers 7 bzw. dessen Segmente 7', 7", 7'" kann dabei wie folgt erfolgen:

Ein langer, ebener bandförmiger Blechstreifen wird zunächst in seinem axialen Endbereich durch Anlegen an eine zylindrische Außenfläche eines Werkzeugs mit der Querschnittskontur versehen, wie sie für die drei Segmente 7', 7", 7'" in Fig. 3 gezeigt ist, d. h. der Blechstreifen bildet in seinem axialen Endbereich einen etwa ein Drittel des Kreisumfangs bildenden Abschnitt. Dieser Abschnitt kann dann von dem langen Blechstreifen abgeschnitten werden, d. h. er wird auf ein Maß abgelängt, das im wesentlichen der gewünschten bzw. benötigten axialen Länge des hülsenförmigen Körpers 7 bzw. der Segmente 7', 7", 7"' entspricht. In einem dritten Arbeitsschritt werden die axialen Ende des so hergestellten Teils des hülsenförmigen Körpers durch Umbördeln einmal radial nach außen (s. Ringabschnitt 10) und einmal radial nach innen (s. Ringabschnitt 10') umgebogen, wodurch das Segment 7', 7", 7'" fertig gestellt wird.

Wenngleich der hülsenförmige Körper 7 bzw. die diesen bildenden Segmente bevorzugt aus Blech bestehen, kann auch vorgesehen werden, dass hier als Material Kunststoff zum Einsatz kommt.

### Bezugszeichenliste

- 1: Lageranordnung
- 2: Tragrollenmantel
- 3: Lager (Wälzlager)
- 4: Lagerring
- 5: Dämpfungsschicht
- 6: innere zylindrische Oberfläche des Tragrollenmantels
- 7: hülsenförmiger Körper
- 7': Segment des hülsenförmigen Körpers
- 7'': Segment des hülsenförmigen Körpers
- 7''': Segment des hülsenförmigen Körpers
- 8: Umfangsstelle
- 9: Unterbrechung (Schlitz)
- 10: Ringabschnitt
- 10': Ringabschnitt
- 10'': Abschnitt (Hakenabschnitt)
- 10''': Abschnitt (Hakenabschnitt)
- 11: Trägerkörper
- 12: Welle
- 13: Bord
- 14: Sprengring
- 15: Sprengring
- 16: Sprengring
- 17: Ausnehmung
- a: axiale Richtung
- s: Spaltbreite
- r₀: Anfangswert des Außenradius des hülsenförmigen Körpers
- r_{E}: Endwert des Außenradius des hülsenförmigen Körpers
- r_{D0}: radiale Erstreckung der Dämpfungsschicht
- r_{DE}: radiale Erstreckung der Dämpfungsschicht
- Δr: Veränderung des Radius

## Patentansprüche

1. Lageranordnung (1) für eine zumindest abschnittsweise hohlzylindrisch ausgebildete Tragrolle, mit mindestens einem einen Tragrollenmantel (2) lagernden Lager (3), wobei zwischen einem Ring (4) des Lagers (3) und dem Tragrollenmantel (2) direkt oder indirekt eine Dämpfungsschicht (5) angeordnet ist, wobei in mindestens einem axialen Abschnittsbereich des Tragrollenmantels (2) zwischen der inneren zylindrischen Oberfläche (6) des Tragrollenmantels (2) und der Dämpfungsschicht (5) ein hülsenförmiger Körper (7) angeordnet ist und wobei der hülsenförmige Körper (7) an mindestens einer Umfangsstelle (8) eine Unterbrechung (9) aufweist,
**dadurch gekennzeichnet,**
**dass** der hülsenförmige Körper (7) an einem axialen Ende einen sich radial nach außen erstreckenden Ringabschnitt (10) oder eine Anzahl sich jeweils über einen definierten Umfangsabschnitt und sich radial nach außen erstreckender Abschnitte (10") aufweist, der bzw. die den Tragrollenmantel (2) axial umgreifen kann bzw. können, wobei der hülsenförmige Körper (7) aus mindestens zwei Segmenten (7', 7", 7'") besteht, die sich jeweils über einen definierten Umfangsabschnitt erstrecken, wobei die Segmente (7', 7", 7"') des hülsenförmigen Körpers (7) voneinander getrennt, aber über das Material der Dämpfungsschicht (5) miteinander verbunden sind, wobei der hülsenförmige Körper (7) an seinem anderen axialen Ende einen sich radial nach innen erstreckenden Ringabschnitt (10') oder eine Anzahl sich jeweils über einen definierten Umfangsabschnitt und sich radial nach innen erstreckender Abschnitte (10'") aufweist.

2. Lageranordnung nach Anspruch 1, **dadurch gekennzeichnet, dass** die Unterbrechung (9) als sich in axiale Richtung (a) des hülsenförmigen Körpers (7) erstreckender Schlitz ausgebildet ist.

3. Lageranordnung nach Anspruch 1 oder 2, **dadurch gekennzeichnet, dass** der hülsenförmige Körper (7) eine im wesentlichen hohlzylindrische Form aufweist.

4. Lageranordnung nach einem der Ansprüche 1 bis 3, **dadurch gekennzeichnet, dass** die Abschnitte (10", 10'") eine im wesentlichen rechteckige Form aufweisen.

5. Lageranordnung nach einem der Ansprüche 1 bis 4, **dadurch gekennzeichnet, dass** sich zwischen den Abschnitten (10", 10"') Ausnehmungen (17) befinden, die sich über 50 % und 150 % des Bogens der Abschnitte (10", 10'") entlang des Umfangs erstrecken.

6. Lageranordnung nach einem der Ansprüche 1 bis 5, **dadurch gekennzeichnet, dass** zwischen dem Ring (4) des Lagers (3) und der Dämpfungsschicht (5) ein Trägerkörper (11) angeordnet ist.

7. Lageranordnung nach einem der Ansprüche 1 bis 6, **dadurch gekennzeichnet, dass** die Dämpfungsschicht (5) zwischen den einen Ring (4) des Lagers (3) oder den Trägerkörper (11) und den hülsenförmiger Körper (7) durch einen Spritzgießvorgang eingebracht ist.

8. Lageranordnung nach einem der Ansprüche 1 bis 7, **dadurch gekennzeichnet, dass** der hülsenförmige Körper (7) mit Presspassung in dem hohlzylindrischen Abschnitt des Tragrollenmantels (2) angeordnet ist.

9. Lageranordnung nach einem der Ansprüche 1 bis 8, **dadurch gekennzeichnet, dass** der Tragrollenmantel (2) als Rohr konstanter Wanddicke ausgebildet ist, das in beiden axialen Endbereichen mit je einem Lager (3) gelagert ist.

10. Verfahren zum Herstellen einer Lageranordnung (1) nach einem der Ansprüche 1 bis 9, **gekennzeichnet durch** die Schritte:
a) Spritzen eines schmelzflüssigen Materials der Dämpfungsschicht (5) zwischen die radial äußere Fläche des Rings (4) des Lagers (3) oder des Trägerkörpers (11) und die radial innere Fläche des hülsenförmigen Körpers (7), wobei der hülsenförmige Körper (7) an der mindestens einen Umfangsstelle (8) in Umfangsrichtung eine Unterbrechung (9) mit einer Spaltbreite (s) bildet;
b) Verfestigenlassen des schmelzflüssigen Materials der Dämpfungsschicht (5), wobei während des Verfestigens des Materials der Dämpfungsschicht (5) eine Kontraktion desselben zugelassen wird, wodurch sich die Spaltbreite (s) der Unterbrechung (9) des hülsenförmigen Körpers (7) vermindert;
c) Verbauen der Einheit bestehend aus Ring (4) des Lagers (3), gegebenenfalls Trägerkörper (11), Dämpfungsschicht (5) und hülsenförmigem Körper (7) in den Tragrollenmantel (2).

11. Verfahren nach Anspruch 10, **dadurch gekennzeichnet, dass** nach der Verfestigung des Materials der Dämpfungsschicht (5) die Spaltbreite (s) Null oder nahe Null ist.

## Claims

1. Bearing arrangement (1) for a loadbearing roller which is of hollow-cylindrical configuration at least in sections, having at least one bearing (3) which mounts a loadbearing-roller shell (2), a damping layer (5) being arranged directly or indirectly between a ring (4) of the bearing (3) and the loadbearing-roller shell (2), a sleeve-shaped body (7) being arranged between the inner cylindrical surface (6) of the loadbearing-roller shell (2) and the damping layer (5) in at least one axial sectional region of the loadbearing-roller shell (2), and the sleeve-shaped body (7) having an interruption (9) at at least one circumferential point (8), **characterized in that**, at one axial end, the sleeve-shaped body (7) has a radially outwardly extending ring section (10) or a number of sections (10") which extend in each case over a defined circumferential section and radially to the outside, which ring section (10) or sections (10") can engage axially around the loadbearing-roller shell (2), the sleeve-shaped body (7) comprising at least two segments (7', 7" , 7"') which extend in each case over a defined circumferential section, the segments (7', 7", 7"') of the sleeve-shaped body (7) being separate from one another but connected to one another via the material of the damping layer (5), the sleeve-shaped body (7) having, at its other axial end, a radially inwardly extending ring section (10') or a number of sections (10"') which extend in each case over a defined circumferential section and radially to the inside.

2. Bearing arrangement according to Claim 1, **characterized in that** the interruption (9) is configured as a slot which extends in the axial direction (a) of the sleeve-shaped body (7).

3. Bearing arrangement according to Claim 1 or 2, **characterized in that** the sleeve-shaped body (7) has a substantially hollow-cylindrical shape.

4. Bearing arrangement according to one of Claims 1 to 3, **characterized in that** the sections (10", 10"') have a substantially rectangular shape.

5. Bearing arrangement according to one of Claims 1 to 4, **characterized in that** recesses (17) are situated between the sections (10", 10"'), which recesses (17) extend along the circumference over 50% and 150% of the arc of the sections (10", 10''').

6. Bearing arrangement according to one of Claims 1 to 5, **characterized in that** a carrier body (11) is arranged between the ring (4) of the bearing (3) and the damping layer (5).

7. Bearing arrangement according to one of Claims 1 to 6, **characterized in that** the damping layer (5) is introduced between one ring (4) of the bearing (3) or the carrier body (11) and the sleeve-shaped body (7) by way of an injection-moulding operation.

8. Bearing arrangement according to one of Claims 1 to 7, **characterized in that** the sleeve-shaped body (7) is arranged with a press fit in the hollow-cylindrical section of the loadbearing-roller shell (2).

9. Bearing arrangement according to one of Claims 1 to 8, **characterized in that** the loadbearing-roller shell (2) is configured as a tube of constant wall thickness which is mounted in both axial end regions by way of in each case one bearing (3).

10. Method for producing a bearing arrangement (1) according to one of Claims 1 to 9, **characterized by** the following steps:
a) injecting of a fused material of the damping layer (5) between the radially outer face of the ring (4) of the bearing (3) or of the carrier body (11) and the radially inner face of the sleeve-shaped body (7), the sleeve-shaped body (7) forming an interruption (9) with a gap width (s) in the circumferential direction at the at least one circumferential point (8);
b) allowing the fused material of the damping layer (5) to solidify, a contraction of the material of the damping layer (5) being permitted during the solidifying of the said material, as a result of which the gap width (s) of the interruption (9) of the sleeve-shaped body (7) is reduced;
c) installing of the unit comprising ring (4) of the bearing (3), possibly carrier body (11), damping layer (5) and sleeve-shaped body (7) into the loadbearing-roller shell (2).

11. Method according to Claim 10, **characterized in that** the gap width (s) is zero or close to zero after the solidifying of the material of the damping layer (5).

## Revendications

1. Ensemble de palier (1) pour un rouleau porteur réalisé au moins en partie sous forme cylindrique creuse, comprenant au moins un palier (3) supportant une enveloppe de rouleau porteur (2), une couche d'amortissement (5) étant disposée directement ou indirectement entre une bague (4) du palier (3) et l'enveloppe de rouleau porteur (2), un corps en forme de douille (7) étant disposé dans au moins une région partielle axiale de l'enveloppe de rouleau porteur (2) entre la surface cylindrique interne (6) de l'enveloppe de rouleau porteur (2) et la couche d'amortissement (5) et le corps en forme de douille (7) présentant une interruption (9) au niveau d'au moins un point de la périphérie (8),
**caractérisé en ce que**
le corps en forme de douille (7) présente, au niveau d'une extrémité axiale, une portion annulaire (10) s'étendant radialement vers l'extérieur ou un certain nombre de portions (10") s'étendant radialement vers l'extérieur à chaque fois sur une portion périphérique définie, laquelle ou lesquelles peut ou peuvent venir en prise axialement autour de l'enveloppe de rouleau porteur (2), le corps en forme de douille (7) se composant d'au moins deux segments (7', 7", 7"') qui s'étendent à chaque fois sur une portion périphérique définie, les segments (7', 7", 7"') du corps en forme de douille (7) étant séparés les uns des autres mais étant connectés les uns aux autres par le biais du matériau de la couche d'amortissement (5), le corps en forme de douille (7) présentant, au niveau de son autre extrémité axiale, une portion annulaire (10') s'étendant radialement vers l'intérieur ou un certain nombre de portions (10"') s'étendant radialement vers l'intérieur à chaque fois sur une portion périphérique définie.

2. Ensemble de palier selon la revendication 1, **caractérisé en ce que** l'interruption (9) est réalisée sous forme de fente s'étendant dans la direction axiale (a) du corps en forme de douille (7).

3. Ensemble de palier selon la revendication 1 ou 2, **caractérisé en ce que** le corps en forme de douille (7) présente une forme essentiellement cylindrique creuse.

4. Ensemble de palier selon l'une quelconque des revendications 1 à 3, **caractérisé en ce que** les portions (10", 10"') présentent une forme essentiellement rectangulaire.

5. Ensemble de palier selon l'une quelconque des revendications 1 à 4, **caractérisé en ce que** des évidements (17) sont situés entre les portions (10", 10"'), lesquels évidements s'étendent le long de la périphérie sur 50 % et 150 % de l'arc des portions (10", 10"').

6. Ensemble de palier selon l'une quelconque des revendications 1 à 5, **caractérisé en ce qu'**un corps de support (11) est disposé entre la bague (4) du palier (3) et la couche d'amortissement (5).

7. Ensemble de palier selon l'une quelconque des revendications 1 à 6, **caractérisé en ce que** la couche d'amortissement (5) est introduite entre l'une des bagues (4) du palier (3) ou le corps de support (11) et le corps en forme de douille (7) par une opération de moulage par injection.

8. Ensemble de palier selon l'une quelconque des revendications 1 à 7, **caractérisé en ce que** le corps en forme de douille (7) est disposé avec ajustement serré dans la portion cylindrique creuse de l'enveloppe de rouleau porteur (2).

9. Ensemble de palier selon l'une quelconque des revendications 1 à 8, **caractérisé en ce que** l'enveloppe de rouleau porteur (2) est réalisée sous forme de tube d'épaisseur de paroi constante, qui est supporté dans les deux régions d'extrémité axiales par un palier respectif (3).

10. Procédé de fabrication d'un ensemble de palier (1) selon l'une quelconque des revendications 1 à 9, **caractérisé par** les étapes suivantes :
a) pulvérisation d'un matériau fusible de la couche d'amortissement (5) entre la surface radialement extérieure de la bague (4) du palier (3) ou du corps de support (11) et la surface radialement interne du corps en forme de douille (7), le corps en forme de douille (7) formant, au niveau de l'au moins un point de la périphérie (8) dans la direction périphérique, une interruption (9) ayant une largeur de fente (s) ;
b) solidification du matériau fusible de la couche d'amortissement (5), une contraction du matériau étant autorisée pendant la solidification du matériau de la couche d'amortissement (5), de sorte que la largeur de fente (s) de l'interruption (9) du corps en forme de douille (7) diminue ;
c) construction de l'unité constituée de la bague (4) du palier (3), éventuellement du corps de support (11), de la couche d'amortissement (5) et du corps en forme de douille (7) dans l'enveloppe de rouleau porteur (2).

11. Procédé selon la revendication 10, **caractérisé en ce qu'**après la solidification du matériau de la couche d'amortissement (5), la largeur de fente (s) est nulle ou pratiquement nulle.
